# EUROPEAN PATENT APPLICATION

(11) **EP 2 315 370 A1**
(43) Date of publication of application: **27.04.2011**
(21) Application number: 09803212.1
(22) Date of filing: 24.07.2009
(51) Int. Cl.: H04B 7/26, H04H 20/62

(54) **SYSTEM FOR COMMUNICATING WITH A MOBILE OBJECT**

(30) Priority: 01.08.2008 RU 2008131676
(71) Applicant: Prokopenko, Yuriy Olegovich, Moscow 117513 (RU)
(72) Inventor: Prokopenko, Yuriy Olegovich, Moscow 117513 (RU)
(74) Representative: Hämmalov, Alla
(86) International application number: PCT/RU2009/000370
(87) International publication number: WO 2010/014031

(57) **Abstract**

The communication system for communication with a mobile object belongs to the area of the wireless communication, in particular to the radio-frequency communication between subscribers, where at least one of them is located on a mobile object and may be used for wireless addressed and inside communication, as well as for transmitting of the data.

The communication system for the communication with the mobile object comprises operator's board having the conversation device and radio-access unit. The system is **characterized in that**, that the system is equipped with a commutation system having a radio-access and with a possibility to transmit the data in the packet form through the network Internet-protocol, comprising the control device containing the power supply, the high-speed network commutator, the interface module and the amplifier, as well as mounted on the mobile object at least one communication device equipped with keys for direct calls, a pedal for switching on the voice channel and a microphone and at least one loudspeaker and one camera for video monitoring. Addiotionally, the radio-acces unit contains blocks for the wideband radio-access and are equipped with antennas.

## Description

### Technical field

The system relates to the set of means for wireless communication, in particular to the radio-frequency communication between subscribers, where at least one of them is located on a mobile object.

The system may be used for providing a wireless addressed and indoor communication, as well as for transmitting of data and vocal information between immobile and mobile objects. Those objects may be, for example cranes or a specialized rolling-stocks, other industrial equipment moving during the operation within a limited distances.

### Prior technical art

It is known a on-board communication network of a rolling-stock, charaterized with a portable control and diagnostic board and (the borad of the train-master), an unified communication assembly (of the basic station), as well as the terminal communication means in each carriage of the rolling-stock. The last ones may be in the form of the mobile radiotelephony for personal use and for passangers use, in the form of the wireless transducers and of the driving devices of the automatic system of the carriage, in the form of miniature terminals of video monitoring.

The known communication network comprises a digital radio link, which communicates the on-board communication network of the rolling-stock with the external communication systems. The communication between the terminal communication devices and the unified communication assembly, as well as between adjasent unified communication assemblies is provided through the radio-frequency channel.

In such a case the frequency band and the level of the radio-frequency in the radio-frequency channel is choosed in such a way that the terminal communication devices communicate only with the unified communication point of the carriage, wherein the terminal communication devices are located at the moment.

The control and diagnostic board is accomplished as a mobile unit and it communicates through the radio-frequency channel with the unified assembly of the certain carriage, wherein the control and diagnostic board is at that moment located (see RU 2206177, Int. Cl. H04B 7/26, published on 10 June 2003).

The drawback of the known communication network consists in the limited range of use and the insufficient functionality, caused by the possibility to transmit the information only by the voice.

### The detailed description of the invention

The aim of the current invention is to provide a unified system for the reliable loudspeaking communication with the mobile objects.

The technical result is related to the widening of the functional possibilities and ranges of the application.

The technical result is obtained in view of the circumstances that the system for the communication with the mobile object includes the operator's board comprising the loudspeaking device and radio-access unit.

The communication system is characterized in that, that it is supplied with a communication system having a radio-access unit and with a package for transfer of data through the network Internet-protocol, comprising a control device comprising a power supply, high-speed network commutator, an interface-module and an amplifier. The system comprises as well at least one loudspeaking device, located on the mobile object, having a keyborad for generating a direct call, foot-driving treadle for switching on the channel of transferring a voice signal and a microphone and at least one loudspeaker and one camera for providing of the video-monitoring. Besides, the radio-access unit comprises the blocks for radio-access in the wideband frequency range and is provided with antennas.

In the specific embodyment of the invention the system comprises two or more operator's boards supplied with the voice-transmitting unit.

In the specific embodyment of the invention the operator's board comprises a liquid crystal display and the voice-transmitting unit, supplied with the microphone, may be realised in a embedded or desk-type mode.

The specific embodyment of the invention the system comprises means for light and voice warning signalisation.

In the specific embodyment of the invention the operator's board is equipped with an extension module having an additional set of functional keys.

The mentione features are important and they are related to the creation of the stabile set of essential features, sufficient to obtain the needed result.

### Description of the figure

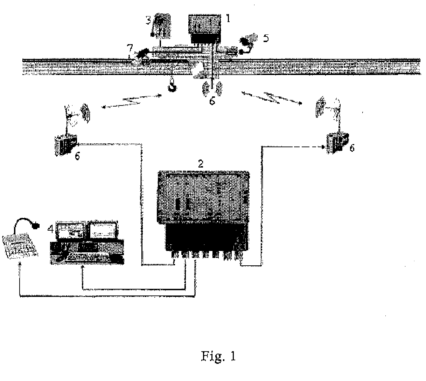

In the figure 1 there is shown the functional scheme of the system for communication with the mobile objects.

### Embodyment of the invention

As an specific example there is illustrated an operation of the system providing the communication with a crane. In the figure 1 there are illustrated the ground station 2, having operator's board 4 and wireless wideband radio-access unit with the antenna 6, as well as crane station 1, having the voice-transmitting device 3, the camera for video monitoring 5, loudspeaking unit 7 and wireless wideband radio-access with the antenna 6.

The system for mobile objects represents itself a mini-system having radio-interface and a switched to it of the attached to the crane voice-transmitting device for crane operator and constitutes a divided IP-commutation system having the radio-access and possibility to transmit data in a packet mode.

The system consists of unified IP-modules, realising the transformation of analog audio and video signals into IP-packets and vise versa.

The voise modulated alternating power of simplex connections is transformed into IP-packets carrying the information and transmitted through the local network or with the aid of the wideband radio-access. Thereupon the signal after decoding in the appropriate transformer, is transformed once again into the alternating voice modulated power. The disturbances in transmitting of the information are compensated by the IP-protocol itself, but likewise in the receiving-transmitting equipment.

As carrier operating frequency there may be used various frequencies in the range from 2 GHz to 5 GHz.

For transmitting of control signals, which make it possible to signal the call, occupation, control of lines and so on, it is used IP-packets, not affecting on the quality of the transmitted voice signal.

In the capacity of the medium for transmitting information between the modules of the system, the channel of the wideband radio-access has been used, which one is composed from the standard radio modems. The range of action between the wideband radio access units depends on the power of the used transmitters, the type of antennas and on the conditions of the environment.

The modules of the system are disposed in the specialised telecommunication mini-cupboards having high class of protection, which are divided functionally on "on-ground stations", i.e. which are attached to the nonmobile constructions and so called "on-crane stations", which are attached to the mobile objects, respectively. The communication between on-ground and on-crane stations is realised through radio-access units of the radio sysem characterised with transmitting data in the packet form.

As mentioned above, the system for the communication with the crane consists of the crane set and on-ground set. The crane set consists of control means, containing main body, which comprises the needed number of appropriate interface-modules, the power supply, high-speed network commutator, wideband radio-access unit with the antenna and the crane conversation device. The set is equipped with a microphone located on a flexible hanger, with a mounted loudspeaker, with keys for direct communication and is having a high class of protection.

The set may be equipped additionally with an amplifier having an output power of 50/100 W for accomplishing the "megaphone" function and with the loudspeaker for covering of the operation area of the crane with a loud voice and for delivering of an information of extraordinary character covering the limited areas, for example in buildings, stores, industrial workshops, construction sites etc.

The set may be equipped with foot-operated pedal for switching on the voice transmitting channel, with the video camera, as well as with devices for light and voice alarming.

The on-ground set consists of control device, containing the mean body, which comprises the needed number of appropriate interfase-modules, the power supply, the high-speed network commutator, the on-desk or embedded board and needed number of wideband radio-access units having antennas.

The on-ground station may operate independently or it may be switched to other communication systems, incorporating in such a way into the system of higher level. For arrangement of the operators' working place the IP-boards are connected directly to the on-ground station. The IP-boards are powered from the independent power supply, they include LC display, at the minimum 16 freely programmable keys with a possibility to extend up to 64 keys (the extension module).

For forwarding of information in the loudspeaking mode, the protected loudspeaking conversation devices or amplifiers may be connected to the on-ground station.

The control device comprises the main body for locating therein the corresponding modules of the transducer and the power supply, the backside panel with prepared cable connections, the panel for connecting with the prepared cable connections and for mounting on the wall. In the same body there may be settled the amplifier for providing the loudspeaking information to be extended in the area under the crane or other modules in the corresponding mode.

The conversation device of the basic version located on the mobile object comprises three rigid conversation buttons having mounted therein light indicators for indicating the call and busy conditions of the lines. There has been used a specific wearproof construction of the buttons and the buttons theirselves are pressed into the conversation device. When there are attached additional bodies the number of the buttons may be extended up to 15. Each button may be programmed for calling one from the subscribers, the group of subscribers, to deliver the announcement in the loudspeaking mode.

The waterproof and dustproof body of the conversation device is produced from the coloured polyester, reinforced with glass fibre. The double outside protective coverage protects the body from decolouring, becoming dirty and from the decomposing action of the chemical substances.

The body is assembled from two monolithic parts, has an effective sealing and fixing details when mounted, givign to the conversation device a high mechanical strength.

The mounted inside microphone and loudspeaker are protected against the metallic dust, as well there is provided the protection against the generation of the condensate inside the body. The conversation device is supplied with a dynanic microphone, mounted on a flexible hanger having a unremovable fixation.

The device is characterized with compactness and ready for operation in any weather conditions. The device enables to provide direct simplex-mode connections for the conversation and deliver the announcements through loudspeaking communication in an open space and in the closes areas having heavy operation conditions; in conditions of an action of the temperature and rainfall, in case of the presence of environmental aggressive chemical compounds, dust, heavy noises and electric fields,

The operation of the conversation device, mounted on the moving object, looks like as the common devices of simplex-communication mode: pressing the button of the communication line one is in a position to have a conversation with the corresponding subscriber. Releasing the button, the subscriber with whom the conversation was performed, can now answer pressing in his conversation device the corresponding key of the line enabling to have a talk.

The information concerning the state of the call or business of the line is indicated whether by blinking or continuous lighting of the corresponding lights of the keys of the lines.

The high-speed network commutator comprises front-panel including five Ethernet-ports and makes it possible to connect the devices inside the system,

The wideband radio-access unit of the receiver-transducer operates on carrier frequences as 2 GHz or 5 GHz and performs the transmitting of the information, acting as a convertor of the medium. The unit is provided with a possibility for the automatic regulation of the level of the transmitted power. For extending of the range of action of the receiver-transmitter, one may use outside antennas, which may have the directional or undirectional performance.

The operator's board of the on-ground station is a conversation device in the simplex form and is operating for direct calls to other conversation devices and for providing a possibility to perform announcements in the loudspeaking mode.

The device has a possibility to use additionally local programmable functions (adjusting of loudness, timbre ets.). The embedded display indicates the needed announcement in the text format. When using the extension modules, the number of keys may be extended up to 64.

The desktop conversation device comprises installed vocal memory and the regulator of loudness. The flesh-memory USB, installed in the desktop conversation device, serves for recording of the information. It comprises standard tones and texts, which may be used by the subscribers of the system for special announcements. Beforehand recorded fragments may be reproduced pressing simply the buttons.

The desktop conversation device is composed of plastic body with installed therein the loudspeaker and the microphone of the type "goose neck", the illuminated two-line display and keyboard comprising 16 keys having light-emitting diodes for the indication. The keys are furnished with inscriptions, describing their individual functions.

In the backside of the body there arc located couplings for connecting of the the power supply, two sockets RJ45 and two light-emitting diodes, indicating to readiness for operation of the conversation device.

The equipment of the proposed communication system possesses the optimal combination of the acoustic parameters of the microphone and loudspeaker and ensures the high quality of the transmitted voice in presence of the external noice level up to 95 dB.

The communication system for communication with the mobile objects is industrially applicable and it has the following additional application possibilities:
1. The equipment of the claimed communication system grants for the selective call of the subscribers, enabling to minimize the system, as well as to save the personnel from the necessity to overhear the announcements addressed to other persons.
2. There has been foreseen a possibility to assign to the calling keys additional functions, such as the signalling ot the business of the lines, the signalling of the calls, the signalling of the priority calls, the signalling of the individual, group or common calls.
3. The system enables to arrange readily the transmittance of data between the cabin of the crane and, for example, the central storage facilities computer.
4. As well it is possible to transmit information from various sensors and to provide the automatic transfer of special alarm signals.

## Claims

1. The communication system for the communication with a mobile object, comprising the operator's board with the conversation device and radio-access unit, **characterized in that**, that the system is equipped with a commutation system having a radio-access and with a possibility to transmit the data in the packet form through the network Internet-protocol, comprising the control device containing the power supply, the high-speed network commutator, the interface module and the amplifier, as well as mounted on the mobile object at least one communication device equipped with keys for direct calls, a pedal for switching on the voice channel and a microphone and at least one loudspeaker and one camera for video monitoring, whereas the radio-acces unit contains blocks for the wideband radio-access and are equipped with antennas.

2. The system according to claim 1, **characterized in that**, that it contains two or more operator's boards together with the conversation device.

3. The system according to claim 2, **characterized in that**, that the operator's board contains a LC-display and the conversation device is equipped with a microphone and may be embedded or located on the desk.

4. The system according to claim 1, **characterized in that**, that it contains devices for light and voice warning signalling.

5. The system according to claim 1, **characterized in that**, that the operator's board is equipped with an extension module having an additional set of functional keys.
